# EUROPEAN PATENT APPLICATION

(11) **EP 4 819 212 A1**
(43) Date of publication of application: **07.10.2026**
(21) Application number: 24897273.9
(22) Date of filing: 12.11.2024
(51) Int. Cl.: H01M 4/13, H01M 4/62, H01M 4/505, H01M 4/525, H01M 10/052

(54) **NON-AQUEOUS ELECTROLYTE SECONDARY BATTERY**

(30) Priority: 28.11.2023 JP 2023200626
(71) Applicant: Panasonic Intellectual Property Management Co., Ltd., Kadoma-shi, Osaka 571-0057 (JP)
(72) Inventor: SAWA, Shouichiro, Kadoma-shi, Osaka 571-0057 (JP); SATO, Hiroki, Kadoma-shi, Osaka 571-0057 (JP); SUZUKI, Yuya, Kadoma-shi, Osaka 571-0057 (JP)
(74) Representative: Novagraaf International SA
(86) International application number: PCT/JP2024/040090
(87) International publication number: WO 2025/115586

(57) **Abstract**

A non-aqueous electrolyte secondary battery (10) comprises a positive electrode (11), a negative electrode (12), and a non-aqueous electrolyte, the non-aqueous electrolyte secondary battery being characterized in that: the positive electrode (11) includes a positive electrode current collector (30) and a positive electrode mixture layer (32) disposed on the surface of the positive electrode current collector (30); the positive electrode mixture layer (32) has a positive electrode active material, a conductive agent, and a binder; the alkali content of the positive electrode active material is 0.5 mass% or more; the hydrogen content of the conductive agent is 1.0 mg/g to 2.0 mg/g; and the binder includes a fluorine-containing polymer.

## Description

### TECHNICAL FIELD

The present disclosure relates to a non-aqueous electrolyte secondary battery.

### BACKGROUND ART

A positive electrode of a non-aqueous electrolyte secondary battery generally includes a positive electrode current collector made of metal foil, a positive electrode active material, a conductive agent, and a binder, and comprises a positive electrode mixture layer provided on the positive electrode current collector. Patent Literature 1 discloses a positive electrode in which a fluorine-containing polymer such as polyvinylidene fluoride (PVdF) is used as a binder.

### CITATION LIST

### PATENT LITERATURE

PATENT LITERATURE 1: International Publication No. WO 2023/162942

### SUMMARY

In recent years, in view of factors such as the widespread use of electric vehicles, there has been a demand for increasing the capacity of a non-aqueous electrolyte secondary battery. As a method for achieving higher capacity in the non-aqueous electrolyte secondary battery, increasing the content of Ni in a lithium-containing transition metal composite oxide included in the positive electrode active material has been studied.

However, a lithium-containing transition metal composite oxide having a high Ni content generally tends to have lithium hydroxide and lithium carbonate remain on the particle surface more readily than a lithium-containing transition metal composite oxide having a low Ni content, and therefore exhibits a larger amount of alkali. In a coating process for producing a positive electrode, a positive electrode active material is mixed with a binder and other components to produce a positive electrode mixture slurry. At this time, when the amount of alkali in the positive electrode active material is large, the residual alkaline components tend to cause deterioration of the binder, and as a result the positive electrode mixture slurry may gel. Gelation of the positive electrode mixture slurry makes the production of a positive electrode having a uniformly coated positive electrode mixture slurry difficult, which is undesirable from the viewpoint of ensuring battery performance.

An object of the present disclosure is to suppress gelation of the positive electrode mixture slurry without increasing the resistance of the positive electrode, even when a positive electrode active material having a large amount of alkali is used.

A non-aqueous electrolyte secondary battery in one aspect of the present disclosure comprises a positive electrode, a negative electrode, a non-aqueous electrolyte, wherein the positive electrode has a positive electrode current collector and a positive electrode mixture layer disposed on a surface of the positive electrode current collector, the positive electrode mixture layer having a positive electrode active material, a conductive agent, and a binder, wherein
an amount of alkali in the positive electrode active material is greater than or equal to 0.5 mass%; a hydrogen content of the conductive agent is greater than or equal to 1.0 mg/g and less than or equal to 2.0 mg/g; and the binder includes a fluorine-containing polymer.

According to a non-aqueous electrolyte secondary battery that is one aspect of the present disclosure, gelation of the positive electrode mixture slurry can be suppressed without increasing the resistance of the positive electrode, even when a positive electrode active material having a large amount of alkali is used.

### BRIEF DESCRIPTION OF DRAWING

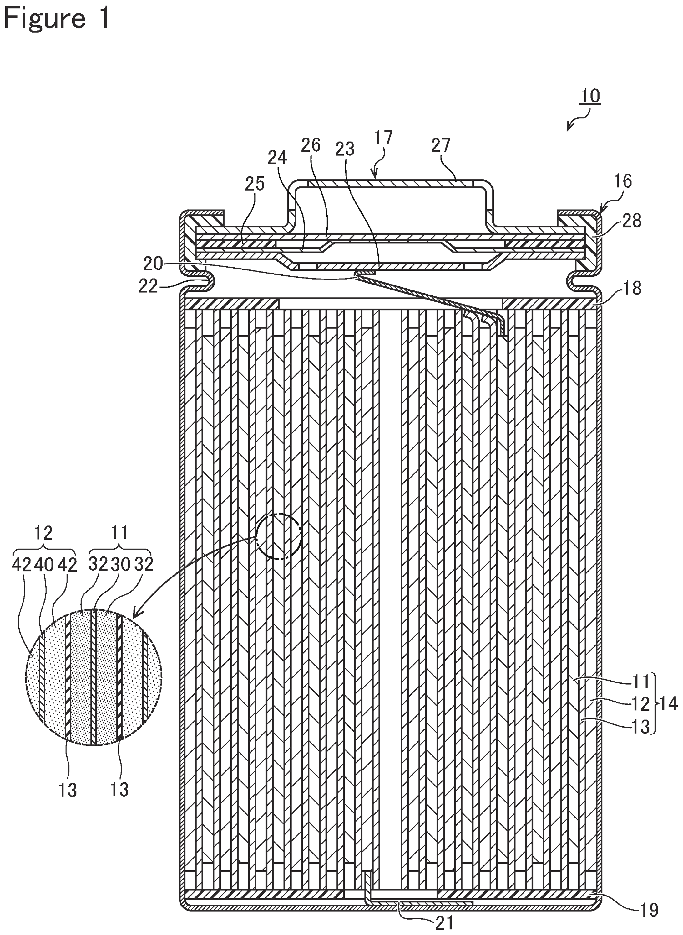

FIG. 1 is an axial sectional view of a non-aqueous electrolyte secondary battery as an example of an embodiment.

### DESCRIPTION OF EMBODIMENTS

Hereinafter, an example of an embodiment of the non-aqueous electrolyte secondary battery according to the present disclosure will be described in detail with reference to the drawing. Note that the scope of the present disclosure includes a configuration composed of selective combination of constituents of a plurality of embodiments and modifications described below.

Hereinafter, a cylindrical battery including a wound electrode assembly 14 accommodated in a bottomed cylindrical housing can 16 will be illustrated as the non-aqueous electrolyte secondary battery, but the housing can of the battery is not limited to a cylindrical housing can. The secondary battery according to the present disclosure may be, for example, a rectangular battery comprising a rectangular housing can, a coin-shaped battery comprising a coin-shaped housing can, or a pouch battery comprising an outer case composed of a laminate sheet including a metal layer and a resin layer. The electrode assembly is not limited to a wound type and may be a stacked electrode assembly in which a plurality of positive electrodes and a plurality of negative electrodes are alternately stacked one by one with separators interposed therebetween.

FIG. 1 is a sectional view of a non-aqueous electrolyte secondary battery 10 as an example of an embodiment. As illustrated in FIG. 1, the non-aqueous electrolyte secondary battery 10 comprises a wound electrode assembly 14, a non-aqueous electrolyte, and a housing can 16 that houses the electrode assembly 14 and the non-aqueous electrolyte. The electrode assembly 14 includes a positive electrode 11, a negative electrode 12, and a separator 13 and has a wound structure in which the positive electrode 11 and the negative electrode 12 are wound with the separator 13 in a spiral shape. The housing can 16 is a bottomed cylindrical metal container having an opening on one side in an axial direction, and the opening of the housing can 16 is sealed with a sealing assembly 17. Hereinafter, for convenience of explanation, the side of the sealing assembly 17 of the battery is described as the "top", and the bottom side of the housing can 16 is described as the "bottom".

The positive electrode 11, the negative electrode 12, and the separator 13 that constitute the electrode assembly 14 are each a long strip-shaped member, and they are alternately stacked in the radial direction of the electrode assembly 14 by being wound in a spiral shape. The negative electrode 12 is formed to be one size larger than the positive electrode 11 to prevent precipitation of lithium. In other words, the negative electrode 12 is formed longer in the longitudinal direction and the width direction than the positive electrode 11. The two separators 13 are formed at least one size larger than the positive electrode 11 and disposed to sandwich the positive electrode 11, for example. The electrode assembly 14 has a positive electrode lead 20 connected to the positive electrode 11 by means of welding or the like, and a negative electrode lead 21 connected to the negative electrode 12 by means of welding or the like.

Insulating plates 18 and 19 are respectively arranged above and below the electrode assembly 14. In the example illustrated in FIG. 1, the positive electrode lead 20 extends through a through-hole in the insulating plate 18 to the side of the sealing assembly 17, and the negative electrode lead 21 extends through a through-hole in the insulating plate 19 to the side of the bottom of the housing can 16. The positive electrode lead 20 is connected to the lower surface of an internal terminal plate 23 of the sealing assembly 17, by means of welding or the like, and a cap 27, the top plate of the sealing assembly 17 electrically connected to the internal terminal plate 23, serves as a positive electrode terminal. The negative electrode lead 21 is connected to the inner surface of the bottom of the housing can 16 by means of welding or the like, and the housing can 16 serves as a negative electrode terminal.

A gasket 28 is provided between the housing can 16 and the sealing assembly 17 to ensure that the interior of the battery is tightly sealed. The housing can 16 includes a grooved portion 22 formed to have a part of a side surface portion projected inward and support the sealing assembly 17. The grooved portion 22 is preferably formed annularly along the peripheral direction of the housing can 16, supporting the sealing assembly 17 by the upper surface thereof. The sealing assembly 17 is fixed to an upper portion of the housing can 16 by means of the grooved portion 22 and an opening end portion of the housing can 16 which is crimped to the sealing assembly 17.

The sealing assembly 17 has a structure in which an internal terminal plate 23, a lower vent member 24, an insulating member 25, an upper vent member 26, and a cap 27 are layered in the order from the side of the electrode assembly 14. The members forming the sealing assembly 17 each have, for example, a disk shape or a ring shape, and the members except for the insulating member 25 are each electrically connected to one another. The lower valve member 24 and the upper valve member 26 are connected to each other at the respective central portions, and the insulating member 25 is interposed between peripheral edge portions of these valve members. When the internal pressure of the battery increases due to abnormal heat generation, the lower valve member 24 deforms and ruptures in a manner pushing up the upper valve member 26 toward the cap 27, and the current path between the lower valve member 24 and the upper valve member 26 is thereby cut off. When the internal pressure further increases, the upper valve member 26 ruptures, and gas is discharged from an opening portion in the cap 27.

Hereinafter, the positive electrode 11, the negative electrode 12, the separator 13, and the non-aqueous electrolyte, all of which constitute the electrode assembly 14, and in particular the positive electrode 11, will be described in detail.

### [Positive Electrode]

The positive electrode 11 has, for a positive electrode current collector 30 and a positive electrode mixture layer 32 disposed on the positive electrode current collector 30. As the positive electrode current collector 30, a foil of a metal that is stable in the potential range of the positive electrode 11, such as aluminum or an aluminum alloy, and a film with the metal disposed on the surface layer, or the like can be used. The positive electrode mixture layer 32, for example, includes a positive electrode active material, a conductive agent, and a binder. As will be described in detail later, the amount of alkali in the positive electrode active material is greater than or equal to 0.5 mass%, and the binder includes a fluorine-containing polymer. The hydrogen content of the conductive agent is greater than or equal to 1.0 mg/g and less than or equal to 2.0 mg/g.

The positive electrode 11 can be produced, for example, by applying a positive electrode mixture slurry including a positive electrode active material, a conductive agent, a binder, and other components onto a positive electrode current collector 30, drying the coating, and then compressing the dried coating to form positive electrode mixture layers 32 on both surfaces of the positive electrode current collector 30.

The positive electrode mixture layer 32 includes, as the positive electrode active material, for example, a lithium-containing transition metal composite oxide. The lithium-containing transition metal composite oxide includes, for example, secondary particles each formed by aggregation of primary particles. The particle diameter of the primary particles constituting the secondary particles of the lithium-containing transition metal composite oxide is, for example, greater than or equal to 0.02 µm and less than or equal to 2 µm. The particle diameter of the primary particles is measured as the diameter of a circumscribed circle in a particle image observed with a scanning electron microscope (SEM). The volume-based median diameter (D50) of the secondary particles of the lithium-containing transition metal composite oxide is, for example, greater than or equal to 2 µm and less than or equal to 30 µm. Note that the volume-based median diameter (D50) refers to the particle diameter at which the cumulative frequency in the volume-based particle size distribution reaches 50% from the smaller-diameter side, and is also referred to as the median diameter. The particle size distribution of the secondary particles of the lithium-containing transition metal composite oxide can be measured using a laser diffraction particle size distribution measuring device (for example, MT3000II, manufactured by MicrotracBEL Corp.) with water as the dispersion medium.

The content of Ni in the lithium-containing transition metal composite oxide is preferably greater than or equal to 80 mol% relative to the total number of moles of metal elements excluding Li. By setting the content of Ni to greater than or equal to 80%, the battery capacity can be improved. In addition, when the content of Ni is greater than or equal to 80%, lithium hydroxide or lithium carbonate tends to remain on the particle surfaces in the production process of the positive electrode active material, and the amount of alkali in the positive electrode active material tends to increase. Accordingly, when the content of Ni is greater than or equal to 80%, the effect of suppressing gelation of the positive electrode mixture slurry, which will be described later, is exhibited more prominently. The content of Ni is preferably greater than or equal to 82 mol%, and more preferably greater than or equal to 85 mol%. From the viewpoint of structural stabilization, the content of Ni is preferably less than or equal to 99 mol%, and more preferably less than or equal to 95 mol%.

The lithium-containing transition metal composite oxide may be, for example, a composite oxide represented by a general formula LiₓNiₐCo_{b}Mn_{c}Al_{d}MₑO₂, where 0.8 < x < 1.2, 0.8 ≤ a, 0 ≤ b ≤ 0.2, 0 ≤ c ≤ 0.2, 0 ≤ d < 0.2, 0 ≤ e ≤ 0.1, and a + b + c + d + e = 1, and M represents one or more elements selected from the group consisting of W, Mg, Mo, Nb, Ti, Si, Ca, Sr, and Zr.

The content of Co in the lithium-containing transition metal composite oxide is greater than or equal to 0 mol% and less than or equal to 20 mol% relative to the total number of moles of metal elements excluding Li, and Co is an optional component. In other words, the lithium-containing transition metal composite oxide may be free of Co. The lithium-containing transition metal composite oxide can improve the heat resistance of the battery by containing Co.

The content of Mn in the lithium-containing transition metal composite oxide is greater than or equal to 0 mol% and less than or equal to 20 mol% relative to the total number of moles of metal elements excluding Li, and Mn is an optional component. In other words, the lithium-containing transition metal composite oxide may be free of Mn. The lithium-containing transition metal composite oxide can stabilize the crystal structure by containing Mn.

The content of Al in the lithium-containing transition metal composite oxide is greater than or equal to 0 mol% and less than or equal to 20 mol% relative to the total number of moles of metal elements excluding Li, and Al is an optional component. In other words, the lithium-containing transition metal composite oxide may be free of Al. The lithium-containing transition metal composite oxide can stabilize the crystal structure by containing Al.

The content of the elements constituting the lithium-containing transition metal composite oxide can be measured using an inductively coupled plasma atomic emission spectrometer (ICP-AES), an electron probe microanalyzer (EPMA), an energy dispersive X-ray spectrometer (EDX), or the like.

Here, the amount of alkali in the positive electrode active material is greater than or equal to 0.5 mass%. In the present description, the amount of alkali in the positive electrode active material refers to the amount of alkali eluted into water when the positive electrode active material is stirred and dispersed in pure water at 25°C, and is specifically calculated by the following measurement method. First, 1.0 g of the positive electrode active material is placed in 30 mL of pure water, stirred for 1 hour, and then filtered to remove solids, thereby obtaining an extract solution. Next, an aqueous hydrochloric acid solution of known concentration is added dropwise to the extract solution until the pH reaches 8.4, and the amount of the aqueous hydrochloric acid solution added dropwise at this time, α, is measured. Thereafter, the same aqueous hydrochloric acid solution is further added dropwise to the extract solution until the pH reaches 4.0, and the amount of the aqueous hydrochloric acid solution added dropwise at this time, β, is measured. In a neutralization titration method (Warder method), 2β corresponds to the amount of lithium carbonate (Li₂CO₃) in the positive electrode active material, and α-β corresponds to the total amount of lithium hydroxide (LiOH) in the positive electrode active material. The sum of the amounts of lithium carbonate and lithium hydroxide is defined as the amount of alkali present in the positive electrode active material.

The amount of alkali in the positive electrode active material may be greater than or equal to 0.5 mass%, and may be greater than or equal to 0.6 mass%, or greater than or equal to 0.7 mass%. The upper limit of the amount of alkali in the positive electrode active material is, for example, 3.0 mass%.

The positive electrode mixture layer 32 includes, in addition to the positive electrode active material, a conductive agent having a hydrogen content greater than or equal to 1.0 mg/g and less than or equal to 2.0 mg/g. Here, when the amount of alkali in the positive electrode active material is greater than or equal to 0.5 mass%, the fluorine-containing polymer included in the binder tends to undergo polyene modification during preparation of the positive electrode mixture slurry due to the residual alkali components. The fluorine-containing polymer that has undergone polyene modification tends to aggregate in the positive electrode mixture slurry and is difficult to disperse. As a result, the viscosity of the positive electrode mixture slurry increases, and the slurry may gel.

Therefore, methods for reducing the amount of alkali in the positive electrode active material have been conventionally studied as techniques for suppressing gelation of the positive electrode mixture slurry. As the method for reducing the amount of alkali in the positive electrode active material, for example, a method of washing the positive electrode active material with water after firing is known. However, when the positive electrode active material is washed with water after firing, metal elements such as Ni present on the particle surfaces of the positive electrode active material may dissolve out. As a result, the capacity of the battery may decrease.

Accordingly, the present inventors have studied a method for suppressing gelation of the positive electrode mixture slurry without a treatment to reduce the amount of alkali in the positive electrode active material, and found that the hydrogen content of the conductive agent greatly affects gelation of the positive electrode mixture slurry. Specifically, the present inventors have found that gelation of the positive electrode mixture slurry can be suppressed by controlling the hydrogen content of the conductive agent to be greater than or equal to 1.0 mg/g and less than or equal to 2.0 mg/g.

The hydrogen content of the conductive agent may be greater than or equal to 1.0 mg/g, and is preferably greater than or equal to 1.1 mg/g, and more preferably greater than or equal to 1.2 mg/g. When the hydrogen content of the conductive agent is greater than or equal to 1.0 mg/g, surface functional groups that improve dispersibility of the conductive agent are appropriately formed on the surface of the conductive agent, thereby enhancing the dispersibility of the conductive agent in the positive electrode mixture slurry. In the positive electrode mixture slurry, the binder tends to become entangled with the conductive agent. Accordingly, as the dispersibility of the conductive agent is improved, the binder is also dispersed in the positive electrode mixture slurry. As a result, aggregation of the binder is suppressed, thereby inhibiting gelation of the positive electrode mixture slurry. The hydrogen content of the conductive agent is used as an index of the dispersibility of the conductive agent because the present inventors have found that the hydrogen content of the conductive agent exhibits an excellent correlation with the dispersibility of the conductive agent. Examples of the surface functional groups that improve the dispersibility of the conductive agent include hydroxy groups or carboxy groups.

In addition, the hydrogen content of the conductive agent may be less than or equal to 2.0 mg/g, and is preferably less than or equal to 1.9 mg/g, and more preferably less than or equal to 1.8 mg/g. When the hydrogen content of the conductive agent exceeds 2.0 mg/g, the conductivity of the conductive agent tends to decrease. As a result, formation of a good conductive path becomes difficult, and the mixture resistance of the positive electrode mixture layer 32 increases. Thus, the hydrogen content of the conductive agent is preferably greater than or equal to 1.1 mg/g and less than or equal to 1.9 mg/g, and more preferably greater than or equal to 1.2 mg/g and less than or equal to 1.8 mg/g. The hydrogen content of the conductive agent may also be greater than or equal to 1.0 mg/g and less than or equal to 1.9 mg/g, or may be greater than or equal to 1.0 mg/g and less than or equal to 1.8 mg/g. In addition, the hydrogen content of the conductive agent may be greater than or equal to 1.1 mg/g and less than or equal to 2.0 mg/g, or may be greater than or equal to 1.2 mg/g and less than or equal to 2.0 mg/g.

The carbon monoxide content of the conductive agent is preferably greater than or equal to 10 mg/g, more preferably greater than or equal to 15 mg/g, and still more preferably greater than or equal to 20 mg/g. Here, the carbon monoxide content of the conductive agent is presumed to indicate the amount of carboxy groups present on the surface of the conductive agent. Accordingly, when the carbon monoxide content of the conductive agent is greater than or equal to 10 mg/g, a good conductive path is formed in the positive electrode mixture layer 32, thereby reducing the mixture resistance of the positive electrode mixture layer 32. On the other hand, when the amount of carboxy groups on the surface of the conductive agent increases excessively, formation of a good conductive path between conductive agents becomes difficult, and the mixture resistance of the positive electrode mixture layer 32 may instead increase. Accordingly, the carbon monoxide content of the conductive agent is preferably less than or equal to 50 mg/g, more preferably less than or equal to 45 mg/g, and still more preferably less than or equal to 40 mg/g. Thus, the carbon monoxide content of the conductive agent is preferably greater than or equal to 10 mg/g and less than or equal to 50 mg/g, more preferably greater than or equal to 15 mg/g and less than or equal to 45 mg/g, and still more preferably greater than or equal to 20 mg/g and less than or equal to 40 mg/g.

The hydrogen content and carbon monoxide content of the conductive agent can be measured, for example, by an inert gas fusion-nondispersive infrared absorption method (measurement device: EMGA-830, manufactured by HORIBA, Ltd.).

From the viewpoint of forming a good conductive path in the positive electrode mixture layer 32, the BET specific surface area of the conductive agent is preferably greater than or equal to 60 m²/g, more preferably greater than or equal to 70 m²/g, and still more preferably greater than or equal to 80 m²/g. On the other hand, when the BET specific surface area of the conductive agent increases excessively, formation of a good conductive path between conductive agents becomes difficult, and the mixture resistance of the positive electrode mixture layer 32 may instead increase. Accordingly, the BET specific surface area of the conductive agent is preferably less than or equal to 150 m²/g, more preferably less than or equal to 140 m²/g, and still more preferably less than or equal to 130 m²/g. Thus, the BET specific surface area of the conductive agent is preferably greater than or equal to 60 m²/g and less than or equal to 150 m²/g, more preferably greater than or equal to 70 m²/g and less than or equal to 140 m²/g, and still more preferably greater than or equal to 80 m²/g and less than or equal to 130 m²/g. The BET specific surface area is measured according to the BET method (nitrogen adsorption method) described in JIS R 1626.

As the conductive agent, one or more materials selected from the group consisting of carbon black (CB) such as furnace black (FB), acetylene black (AB), and Ketjenblack (KB), carbon nanotubes (CNTs), and graphene may be used. Among these, from the viewpoint of setting the hydrogen content to greater than or equal to 1.0 mg/g and less than or equal to 2.0 mg/g, furnace black is preferably used as the conductive agent. The hydrogen content of the conductive agent may also be adjusted by subjecting the conductive agent to a surface treatment. Examples of the above surface treatment include surface oxidation by acid treatment using a strong acid. Carboxy groups may be introduced onto the surface of the conductive agent by immersing the conductive agent in a mixed acid of sulfuric acid and nitric acid and performing a heat treatment.

The conductive agent is present, for example, in a particulate form in the positive electrode mixture layer 32. When the conductive agent is particulate, the average particle diameter of the primary particles of the conductive agent is preferably less than or equal to 25 nm, more preferably less than or equal to 20 nm. When the average particle diameter of the primary particles of the conductive agent exceeds 25 nm, formation of a good conductive path becomes difficult, and the mixture resistance of the positive electrode mixture layer 32 may increase. The lower limit of the average particle diameter of the primary particles of the conductive agent is, for example, 1 nm. The particle diameter of the primary particles of the conductive agent is measured as the diameter of a circumscribed circle in particle images observed by transmission electron microscopy (TEM). The average particle diameter of the primary particles of the conductive agent is determined by arbitrarily selecting 100 particles of particulate conductive agents, measuring the particle diameter of each primary particle, and calculating the arithmetic mean of the measured values.

In the positive electrode mixture layer 32, the content of the conductive agent relative to the total mass of the positive electrode active material is preferably greater than or equal to 0.5 mass%, more preferably greater than or equal to 0.6 mass%, and still more preferably greater than or equal to 0.7 mass%. When the content of the conductive agent is greater than or equal to 0.5 mass%, a good conductive path is formed in the positive electrode mixture layer 32, thereby reducing the mixture resistance of the positive electrode mixture layer 32. From the viewpoint of ensuring a sufficient amount of the positive electrode active material in the positive electrode mixture layer 32 and achieving a high battery capacity, in the positive electrode mixture layer 32, the content of the conductive agent relative to the total mass of the positive electrode active material is preferably less than or equal to 2.0 mass%, more preferably less than or equal to 1.9 mass%, and still more preferably less than or equal to 1.8 mass%. Thus, in the positive electrode mixture layer 32, the content of the conductive agent relative to the total mass of the positive electrode active material is preferably greater than or equal to 0.5 mass% and less than or equal to 2.0 mass%, more preferably greater than or equal to 0.6 mass% and less than or equal to 1.9 mass%, and still more preferably greater than or equal to 0.7 mass% and less than or equal to 1.8 mass%.

In the positive electrode mixture layer 32, at least one of the group consisting of a conductive agent having a hydrogen content of less than 1.0 mg/g and a conductive agent having a hydrogen content of greater than 2.0 mg/g may be contained as the conductive agent. However, a conductive agent having a hydrogen content of greater than or equal to 1.0 mg/g and less than or equal to 2.0 mg/g is preferably used as a main component. More specifically, in the positive electrode mixture layer 32, the content of the conductive agent having a hydrogen content of greater than or equal to 1.0 mg/g and less than or equal to 2.0 mg/g relative to the total mass of the conductive agent is preferably greater than or equal to 90 mass%, more preferably greater than or equal to 95 mass%, and still more preferably greater than or equal to 99 mass%.

The positive electrode mixture layer 32 includes a binder in addition to the positive electrode active material and the conductive agent. The binder includes at least a fluorine-containing polymer such as polytetrafluoroethylene (PTFE) and polyvinylidene fluoride (PVdF). Because fluorine-containing polymers exhibit strong binding force, the use of a fluorine-containing polymer as the binder suppresses peeling of the positive electrode mixture layer 32 from the positive electrode current collector 30. In addition, as described above, in a positive electrode mixture slurry including a positive electrode active material having a large amount of alkali, the fluorine-containing polymer undergoes polyene formation and tends to aggregate. Therefore, when the binder includes a fluorine-containing polymer, the effects of the present disclosure are exhibited.

In the positive electrode mixture layer 32, the content of the binder relative to the total mass of the positive electrode active material is preferably greater than or equal to 0.5 mass%, more preferably greater than or equal to 0.6 mass%, and still more preferably greater than or equal to 0.7 mass%. When the content of the binder is greater than or equal to 0.5 mass%, peeling of the positive electrode mixture layer 32 from the positive electrode current collector 30 is further suppressed. From the viewpoint of ensuring a sufficient amount of the positive electrode active material in the positive electrode mixture layer 32 and achieving a high battery capacity, in the positive electrode mixture layer 32, the content of the binder relative to the total mass of the positive electrode active material is preferably less than or equal to 2.0 mass%, more preferably less than or equal to 1.9 mass%, and still more preferably less than or equal to 1.8 mass%. Thus, in the positive electrode mixture layer 32, the content of the binder relative to the total mass of the positive electrode active material is preferably greater than or equal to 0.5 mass% and less than or equal to 2.0 mass%, more preferably greater than or equal to 0.6 mass% and less than or equal to 1.9 mass%, and still more preferably greater than or equal to 0.7 mass% and less than or equal to 1.8 mass%.

The binder may include a binder other than the above fluorine-containing polymer. Examples of the binder other than fluorine-containing polymer include polyacrylonitrile (PAN), polyimide, acrylic resin, and polyolefin. The binder may also be used in combination with the resin and carboxymethyl cellulose (CMC) or a salt thereof, polyethylene oxide (PEO), or the like.

### [Negative Electrode]

The negative electrode 12 may have, for example, a negative electrode current collector 40 and a negative electrode mixture layer 42 formed on the surface of the negative electrode current collector 40, or a metal Li foil may be used as the negative electrode 12. The negative electrode 12 may have the negative electrode current collector 40, and lithium metal may be deposited on the surface of the negative electrode current collector 40 by charging. When the negative electrode 12 has a negative electrode mixture layer 42, the negative electrode mixture layer 42 is preferably formed on both the surfaces of the negative electrode current collector 40. As the negative electrode current collector 40, a metal foil that is stable in the potential range of the negative electrode 12, such as copper or a copper alloy, or a film with the metal disposed on a surface layer may be used. The thickness of the negative electrode current collector 40 is, for example, greater than or equal to 5 µm and less than or equal to 30 µm.

The negative electrode mixture layer 42 includes, for example, a negative electrode active material and a binder. The thickness of the negative electrode mixture layer 42 is greater than or equal to 10 µm and less than or equal to 150 µm, for example, on one side of the negative electrode current collector 40. The negative electrode 12 can be produced, for example, by applying a negative electrode mixture slurry including a negative electrode active material and a binder onto the surface of the negative electrode current collector 40, drying the coating, and then rolling the dried coating to form the negative electrode mixture layer 42 on both the surfaces of the negative electrode current collector 40.

As the negative electrode active material included in the negative electrode mixture layer 42, any material capable of reversibly intercalating and releasing lithium ions may be used without particular limitation, and generally, carbon materials such as graphite are used. The graphite may be natural graphite, such as flake graphite, lump graphite, or earthy graphite, or artificial graphite, such as lump artificial graphite or graphitized mesophase carbon microbeads. In addition, as the negative electrode active material, metals that alloy with Li, such as Si and Sn, metal compounds including Si, Sn, or the like, or lithium titanium composite oxides may be used. Furthermore, materials provided with a carbon coating on these may also be used. For example, a Si-containing compound represented by SiOₓ (0.5 ≤ x ≤ 1.6) or a Si-containing compound in which fine particles of Si are dispersed in a lithium silicate phase represented by Li_{2y}SiO_{(2+y)} (0 < y < 2) may be used in combination with graphite.

Examples of the binder included in the negative electrode mixture layer 42 include styrene-butadiene rubber (SBR), nitrile-butadiene rubber (NBR), carboxymethyl cellulose (CMC) or salts thereof, polyacrylic acid (PAA) or a salt thereof (such as PAA-Na, PAA-K, or partially neutralized salts), and polyvinyl alcohol (PVA). The binders may be used singly or in combination with two or more types thereof.

### [Separator]

As the separator 13, a porous sheet having ion permeability and insulation properties may be used. Specific examples of the porous sheet include microporous thin films, woven fabrics, and nonwoven fabrics. Types of material for the separator 13 include polyolefins such as polyethylene and polypropylene, and cellulose. The separator 13 may have a single-layer structure or a multilayer structure. Further, a heat-resistant resin layer such as an aramid resin layer may be formed on the surface of the separator 13.

A filler layer including an inorganic filler may be formed at the interface between the separator 13 and at least one of the group consisting of the positive electrode 11 and the negative electrode 12. Examples of the inorganic filler include oxides containing metal elements such as Ti, Al, Si, and Mg, and phosphate compounds. The filler layer can be formed by applying a slurry containing the filler to the surface of the positive electrode 11, the negative electrode 12, or the separator 13.

### [Non-Aqueous Electrolyte]

The non-aqueous electrolyte has ion conductivity (for example, lithium ion conductivity). The non-aqueous electrolyte may be a liquid electrolyte (electrolyte solution) or a solid electrolyte.

The liquid electrolyte (electrolyte solution) includes, for example, a non-aqueous solvent and an electrolyte salt dissolved in the non-aqueous solvent. For the non-aqueous solvent, esters, ethers, nitriles such as acetonitrile, amides such as dimethylformamide, and a mixed solvent composed of two or more thereof are used, for example. The non-aqueous solvent may contain a halogen-substituted product in which hydrogen of these solvents is at least partially substituted with a halogen atom such as fluorine. Examples of the halogen-substituted product include fluorinated cyclic carbonate esters such as fluoroethylene carbonate (FEC), fluorinated linear carbonate esters, and fluorinated linear carboxylic acid esters such as methyl fluoropropionate (FMP).

Examples of the esters include cyclic carbonate esters such as ethylene carbonate (EC), propylene carbonate (PC), and butylene carbonate; linear carbonate esters such as dimethyl carbonate (DMC), ethyl methyl carbonate (EMC), diethyl carbonate (DEC), methyl propyl carbonate, ethyl propyl carbonate, and methyl isopropyl carbonate; cyclic carboxylic acid esters such as γ-butyrolactone (GBL) and γ-valerolactone (GVL); and linear carboxylic acid esters such as methyl acetate, ethyl acetate, propyl acetate, methyl propionate (MP), and ethyl propionate (EP).

Examples of the ethers include cyclic ethers such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineole, and crown ethers; and linear ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

The electrolyte salt is preferably a lithium salt. Examples of lithium salts include LiClO₄, LiBF₄, LiPF₆, LiAlCl₄, LiSbF₆, LiSCN, LiCF₃SO₃, LiCF₃CO₂, LiAsF₆, LiB₁₀Cl₁₀, lower aliphatic carboxylic acid lithium salts, LiCl, LiBr, LiI, phosphate salts, borate salts, and imide salts. Examples of the phosphate salts include lithium difluorophosphate (LiPO₂F₂), lithium difluoro bis(oxalato)phosphate (LiDFBOP), and lithium tetrafluoro(oxalato)phosphate. Examples of borate salts include lithium bis(oxalato)borate (LiBOB) and lithium difluoro(oxalato)borate (LiDFOB). Examples of imide salts include lithium bis(fluorosulfonyl)imide (LiN(FSO₂)₂), lithium bis(trifluoromethanesulfonyl)imide (LiN(CF₃SO₂)₂), lithium trifluoromethanesulfonyl nonafluorobutanesulfonyl imide (LiN(CF₃SO₂)(C₄F₉SO₂)), and lithium bis(pentafluoroethanesulfonyl)imide (LiN(C₂F₅SO₂)₂). Among these, LiPF₆ is preferably used from the standpoint of ionic conductivity and electrochemical stability. The concentration of the lithium salt may be, for example, less than or equal to 4 mol per liter of non-aqueous solvent, or less than or equal to 3 mol, and is preferably less than or equal to 1.8 mol, and more preferably greater than or equal to 0.8 mol and less than or equal to 1.8 mol.

The non-aqueous electrolyte may contain additives. Examples of additives include unsaturated carbonate esters, acid anhydrides, phenolic compounds, benzene compounds, nitrile compounds, isocyanate compounds, sultone compounds, sulfate compounds, borate ester compounds, phosphate ester compounds, and phosphite ester compounds.

Examples of unsaturated cyclic carbonate esters include vinylene carbonate, 4-methylvinylene carbonate, 4,5-dimethylvinylene carbonate, 4-ethylvinylene carbonate, 4,5-diethylvinylene carbonate, 4-propylvinylene carbonate, 4,5-dipropylvinylene carbonate, 4-phenylvinylene carbonate, 4,5-diphenylvinylene carbonate, vinyl ethylene carbonate, and divinyl ethylene carbonate. The unsaturated cyclic carbonate ester may be used singly or in combination with two or more kinds thereof. The unsaturated cyclic carbonate ester may have a portion of its hydrogen atoms substituted with fluorine atoms. The acid anhydride may be an anhydride formed by intermolecular condensation of multiple carboxylic acid molecules, but is preferably an acid anhydride of a polycarboxylic acid. Examples of polycarboxylic acid anhydrides include succinic anhydride, maleic anhydride, and phthalic anhydride.

Examples of the phenolic compounds include phenol and hydroxytoluene. Examples of benzene compounds include fluorobenzene, hexafluorobenzene, and cyclohexylbenzene (CHB).

Examples of the nitrile compounds include adiponitrile, pimelonitrile, propionitrile, and succinonitrile. Examples of the isocyanate compounds include methyl isocyanate (MIC), diphenylmethane diisocyanate (MDI), hexamethylene diisocyanate (HDI), toluene diisocyanate (TDI), isophorone diisocyanate (IPDI), and bis(isocyanate methyl)cyclohexane (BIMCH). Examples of the sultone compounds include propane sultone and propene sultone. Examples of the sulfate compounds include ethylene sulfate, ethylene sulfite, dimethyl sulfate, and lithium fluorosulfate. Examples of the borate ester compounds include trimethyl borate and tris(trimethylsilyl)borate. Examples of the phosphate ester compounds include trimethyl phosphate and tris(trimethylsilyl)phosphate. Examples of the phosphite ester compounds include trimethyl phosphite and tris(trimethylsilyl)phosphite.

As the solid electrolyte, for example, a solid or gel-type polymer electrolyte or an inorganic solid electrolyte may be used. As the inorganic solid electrolyte, materials known for use in all-solid-state lithium-ion secondary batteries (for example, oxide-based solid electrolytes, sulfide-based solid electrolytes, and halogen-based solid electrolytes) may be used. The polymer electrolyte may include, for example, a lithium salt and a matrix polymer, or a non-aqueous solvent, a lithium salt, and a matrix polymer. As the matrix polymer, polymer materials that absorb the non-aqueous solvent and form a gel may be used. Examples of the polymer materials include fluororesins, acrylic resins, and polyether resins.

### EXAMPLES

Hereinafter, the present disclosure will be described in more detail with reference to Examples and Comparative Examples, but the present disclosure is not limited to Examples.

### <Example 1>

### [Production of Positive Electrode Active Material]

A composite hydroxide represented by [Ni_{0.87}Co_{0.09}Al_{0.04}](OH)₂ obtained by a coprecipitation method was fired at 500°C for 8 hours to obtain a metal oxide including Ni, Co, and Al. Next, lithium hydroxide monohydrate (LiOH·H₂O) was mixed so that a molar ratio of Li to a total amount of Ni, Co, and Al became 1:1.03, thereby obtaining a mixture. Subsequently, the mixture was heated under an oxygen stream having an oxygen concentration of 95% (a flow rate of 2 mL/min per 10 cm³ and 5 L/min per kg of the mixture), in which the mixture was heated from room temperature to 650°C at a temperature rising rate of 2.0°C/min and fired, and then heated from 650°C to 740°C at a temperature rising rate of 0.5°C/min and fired to obtain a lithium-containing transition metal composite oxide. An amount of alkali of the lithium-containing transition metal composite oxide was 0.6 mass% as measured by the above-described method.

### [Production of Positive Electrode]

The positive electrode active material, furnace black (FB) having an average primary-particle diameter of 18 nm as a conductive agent, and polyvinylidene fluoride (PVdF) powder as a binder were mixed at a mass ratio of 100:1:0.9, and an appropriate amount of N-methyl-2-pyrrolidone (NMP) was further added to prepare a positive electrode mixture slurry. The hydrogen content and carbon monoxide content of the furnace black were 1.2 mg/g and 20 mg/g, respectively, as measured by the above-described method. The BET specific surface area of the furnace black was 100 m²/g.

Subsequently, the positive electrode mixture slurry was applied to both surfaces of a positive electrode current collector made of aluminum foil, and the coating was dried and compressed. Thereafter, the positive electrode current collector was cut into a predetermined electrode size to produce a positive electrode in which positive electrode mixture layers were formed on both surfaces of the positive electrode current collector. The thickness of the positive electrode mixture layer was 80 µm on one side of the positive electrode current collector.

### [Evaluation of Slurry Viscosity]

The viscosity of the positive electrode mixture slurry prepared in the production of the positive electrode was measured 72 hours after preparation using a viscosity measuring device under the following conditions. When gelation of the positive electrode mixture slurry occurs, the slurry viscosity increases. Accordingly, this method allows evaluation of whether gelation has occurred in the positive electrode mixture slurry.

Viscosity measuring device: TV-22 viscometer, manufactured by Toki Sangyo Co., Ltd.

Rotation speed and measurement time: rotated at 2 rpm and measured for 60 seconds

### [Evaluation of Peeling Strength]

The positive electrode produced in the production of the positive electrode was cut into a predetermined size to obtain test pieces. Using double-coated adhesive tape No. 515 manufactured by Nitto Denko Corporation, one surface of the positive electrode mixture layer of each test piece was adhered to a stainless steel substrate having a smooth surface, and the stainless steel substrate to which the test piece was fixed was placed horizontally. One end of the positive electrode current collector in the longitudinal direction of the test piece was fixed to a movable jig of a tensile tester (universal tensile testing instrument RTC1210, manufactured by A&D Co., Ltd.). After setting the peeling direction of the positive electrode current collector to 90° relative to the surface of the stainless steel substrate, the movable jig was moved to peel the positive electrode mixture layer and the positive electrode current collector of the test piece at a speed of 100 mm/min. During peeling, the tensile direction was maintained at 90° relative to the surface of the stainless steel substrate fixing the test piece. When greater than or equal to 30 mm of the test piece had been peeled, the stable tensile strength value was read. The above measurement was performed on five test pieces, and the average of the measured values was taken as the peeling strength (N/m).

### [Measurement of Mixture Resistance]

For the positive electrode produced in the production of the positive electrode, the mixture resistance was measured using an electrode resistance meter (model: RM2610) manufactured by Hioki E.E. Corporation. The measurement current was set to 100 µA, and the voltage range was set to 0.5 V.

### <Comparative Example 1>

A positive electrode was produced and evaluated in the same manner as in Example 1, except that furnace black having a hydrogen content of 0.6 mg/g and a carbon monoxide content of 10 mg/g was used as the conductive agent.

### <Comparative Example 2>

A positive electrode was produced and evaluated in the same manner as in Example 1, except that furnace black having a hydrogen content of 2.4 mg/g and a carbon monoxide content of 40 mg/g was used as the conductive agent.

### <Comparative Example 3>

A positive electrode was produced and evaluated in the same manner as in Example 1, except that furnace black having an average primary-particle diameter of 28 nm was used as the conductive agent. The hydrogen content and carbon monoxide content of the furnace black, as measured by the above-described method, were 2.4 mg/g and 40 mg/g, respectively. The BET specific surface area of the furnace black was 62 m²/g.

### <Comparative Example 4>

A positive electrode was produced and evaluated in the same manner as in Example 1, except that acetylene black (AB) having an average primary-particle diameter of 23 nm was used as the conductive agent. The hydrogen content and carbon monoxide content of the acetylene black, as measured by the above-described method, were 0 mg/g and 0 mg/g, respectively. The BET specific surface area of the acetylene black was 130 m²/g.

### <Comparative Example 5>

A positive electrode was produced and evaluated in the same manner as in Example 1, except that acetylene black (AB) having an average primary-particle diameter of 30 nm was used as the conductive agent. The hydrogen content and carbon monoxide content of the acetylene black, as measured by the above-described method, were 0 mg/g and 0 mg/g, respectively. The BET specific surface area of the acetylene black was 63 m²/g.

### <Reference Example 1>

A positive electrode was produced and evaluated in the same manner as in Example 1, except that the fired lithium-containing transition metal composite oxide was washed with distilled water for 2 hours and then dried at 150°C for 4 hours using a vacuum dryer in the production of the positive electrode active material. The amount of alkali in the lithium-containing transition metal composite oxide in Reference Example 1, as measured by the above-described method, was 0.1 mass%.

### <Reference Example 2>

A positive electrode was produced and evaluated in the same manner as Comparative Example 4, except that the fired lithium-containing transition metal composite oxide was washed with distilled water for 2 hours and then dried at 150°C for 4 hours using a vacuum dryer in the production of the positive electrode active material. The amount of alkali in the lithium-containing transition metal composite oxide in Reference Example 2, as measured by the above-described method, was 0.1 mass%.

For the Examples, Comparative Examples, and Reference Examples, the slurry viscosity, peeling strength, and mixture resistance are listed in Table 1. The slurry viscosity, peeling strength, and mixture resistance listed in Table 1 are expressed relative to those of Comparative Example 1, which are taken as 100. A smaller value of slurry viscosity indicates a lower viscosity, a larger value of peeling strength indicates a higher peeling strength, and a smaller value of mixture resistance indicates a lower resistance.

**[Table 1]**

| | Positive Electrode Active material | Conductive agent | | | | | Binder | Evaluation result | | |
|---|---|---|---|---|---|---|---|---|---|---|
| | Amount of Alkali [mass%] | Type | Hydrogen Content [mg/g] | Carbon Monoxide Content [mg/g] | Particle Diameter of primary particle [nm] | BET Specific Surface Area [m²/g] | Type | Slurry Viscosity (relative value) | Peeling Strength (relative value) | Mixture Resistance (relative value) |
| Example 1 | 0.6 | FB | 1.2 | 20 | 18 | 100 | PVdF | 63 | 100 | 104 |
| Comparative Example 1 | 0.6 | FB | 0.6 | 10 | 18 | 100 | PVdF | 100 | 100 | 100 |
| Comparative Example 2 | 0.6 | FB | 2.4 | 40 | 18 | 100 | PVdF | 63 | 108 | 143 |
| Comparative Example 3 | 0.6 | FB | 2.4 | 40 | 28 | 62 | PVdF | 63 | 103 | 174 |
| Comparative Example 4 | 0.6 | AB | 0 | 0 | 23 | 130 | PVdF | 188 | 90 | 100 |
| Comparative Example 5 | 0.6 | AB | 0 | 0 | 30 | 63 | PVdF | 213 | 109 | 117 |
| Reference Example 1 | 0.1 | FB | 1.2 | 20 | 18 | 100 | PVdF | 63 | 100 | 104 |
| Reference Example 2 | 0.1 | AB | 0 | 0 | 23 | 130 | PVdF | 63 | 90 | 100 |

As shown in Table 1, the positive electrodes of the Examples achieve slurry viscosity, peeling strength, and mixture resistance comparable to those of the Reference Example, which uses a positive electrode active material having a low alkali content. That is, by setting the hydrogen content of the conductive agent to greater than or equal to 1.0 mg/g and less than or equal to 2.0 mg/g, it can be said that gelation of the positive electrode mixture slurry can be suppressed without increasing the resistance, even when a positive electrode active material having a large amount of alkali is used.

In Comparative Examples 1, 4, and 5, in which a conductive agent having a hydrogen content of less than 1.0 mg/g was used, the slurry viscosity increased. This is presumed to be because a conductive agent having a hydrogen content of less than 1.0 mg/g exhibits insufficient dispersibility, causing aggregation of the binder and consequently leading to gelation of the positive electrode mixture slurry.

In Comparative Examples 2 and 3, in which a conductive agent having a hydrogen content of greater than 2.0 mg/g was used, the mixture resistance increased. This is presumed to be because a conductive agent having a hydrogen content of greater than 2.0 mg/g tends to form poor conductive paths between conductive agents.

The present disclosure will be further described with reference to embodiments below.

Constitution 1: A non-aqueous electrolyte secondary battery, comprising: a positive electrode; a negative electrode; and a non-aqueous electrolyte, wherein the positive electrode has a positive electrode current collector and a positive electrode mixture layer disposed on a surface of the positive electrode current collector, the positive electrode mixture layer having a positive electrode active material, a conductive agent, and a binder, wherein an amount of alkali in the positive electrode active material is greater than or equal to 0.5 mass%, a hydrogen content of the conductive agent is greater than or equal to 1.0 mg/g and less than or equal to 2.0 mg/g, and the binder includes a fluorine-containing polymer.

Constitution 2: The non-aqueous electrolyte secondary battery according to Constitution 1, wherein a carbon monoxide content of the conductive agent is greater than or equal to 10 mg/g and less than or equal to 50 mg/g.

Constitution 3: The non-aqueous electrolyte secondary battery according to Constitution 1 or 2, wherein the conductive agent is furnace black.

Constitution 4: The non-aqueous electrolyte secondary battery according to any one of Constitutions 1 to 3, wherein, in the positive electrode mixture layer, a content of the conductive agent relative to a total mass of positive electrode active material is greater than or equal to 0.5 mass% and less than or equal to 2.0 mass%.

Constitution 5: The non-aqueous electrolyte secondary battery according to any one of Constitutions 1 to 4, wherein the conductive agent has an average primary-particle diameter of less than or equal to 25 nm.

Constitution 6: The non-aqueous electrolyte secondary battery according to any one of Constitutions 1 to 5, wherein a BET specific surface area of the conductive agent is greater than or equal to 60 m²/g and less than or equal to 150 m²/g.

Constitution 7: The non-aqueous electrolyte secondary battery according to any one of Constitutions 1 to 6, wherein the positive electrode active material has a lithium-containing transition metal composite oxide containing Ni, a proportion of Ni in the lithium-containing transition metal composite oxide is greater than or equal to 80 mol% relative to a total number of moles of metal elements excluding Li.

Constitution 8: The non-aqueous electrolyte secondary battery according to Constitution 7, wherein the lithium-containing transition metal composite oxide is represented by a general formula LiₓNiₐCo_{b}Mn_{c}Al_{d}MₑO₂, where 0.8 < x < 1.2, 0.8 ≤ a, 0 ≤ b ≤ 0.2, 0 ≤ c ≤ 0.2, 0 ≤ d < 0.2, 0 ≤ e ≤ 0.1, and a + b + c + d + e = 1, and M represents at least one element selected from the group consisting of W, Mg, Mo, Nb, Ti, Si, Ca, Sr, and Zr.

### REFERENCE SIGNS LIST

10 Non-aqueous electrolytic solution secondary battery, 11 Positive electrode, 12 Negative electrode, 13 Separator, 14 Electrode assembly, 16 Housing can, 17 Sealing assembly, 18, 19 Insulating plate, 20 Positive electrode lead, 21 Negative electrode lead, 22 Grooved portion, 23 Internal terminal plate, 24 Lower vent member, 25 Insulating member, 26 Upper vent member, 27 Cap, 28 Gasket, 30 Positive electrode current collector, 32 Positive electrode mixture layer, 40 Negative electrode current collector, 42 Negative electrode mixture layer

## Claims

1. A non-aqueous electrolyte secondary battery, comprising:
a positive electrode;
a negative electrode; and
a non-aqueous electrolyte, wherein
the positive electrode has a positive electrode current collector and a positive electrode mixture layer disposed on a surface of the positive electrode current collector,
the positive electrode mixture layer having a positive electrode active material, a conductive agent, and a binder, wherein
an amount of alkali in the positive electrode active material is greater than or equal to 0.5 mass%,
a hydrogen content of the conductive agent is greater than or equal to 1.0 mg/g and less than or equal to 2.0 mg/g, and
the binder includes a fluorine-containing polymer.

2. The non-aqueous electrolyte secondary battery according to claim 1, wherein a carbon monoxide content of the conductive agent is greater than or equal to 10 mg/g and less than or equal to 50 mg/g.

3. The non-aqueous electrolyte secondary battery according to claim 1, wherein the conductive agent is furnace black.

4. The non-aqueous electrolyte secondary battery according to claim 1, wherein, in the positive electrode mixture layer, a content of the conductive agent relative to a total mass of the positive electrode active material is greater than or equal to 0.5 mass% and less than or equal to 2.0 mass%.

5. The non-aqueous electrolyte secondary battery according to claim 1, wherein the conductive agent has an average primary-particle diameter of less than or equal to 25 nm.

6. The non-aqueous electrolyte secondary battery according to claim 1, wherein a BET specific surface area of the conductive agent is greater than or equal to 60 m²/g and less than or equal to 150 m²/g.

7. The non-aqueous electrolyte secondary battery according to claim 1, wherein
the positive electrode active material has a lithium-containing transition metal composite oxide containing Ni,
a proportion of Ni in the lithium-containing transition metal composite oxide is greater than or equal to 80 mol% relative to a total number of moles of metal elements excluding Li.

8. The non-aqueous electrolyte secondary battery according to claim 7, wherein the lithium-containing transition metal composite oxide is represented by a general formula LiₓNiₐCo_{b}Mn_{c}Al_{d}MₑO₂, where 0.8 < x < 1.2, 0.8 ≤ a, 0 ≤ b ≤ 0.2, 0 ≤ c ≤ 0.2, 0 ≤ d < 0.2, 0 ≤ e ≤ 0.1, and a + b + c + d + e = 1, and M represents at least one element selected from the group consisting of W, Mg, Mo, Nb, Ti, Si, Ca, Sr, and Zr.
